# EUROPEAN PATENT APPLICATION

(11) **EP 3 860 249 A1**
(43) Date of publication of application: **04.08.2021**
(21) Application number: 18935386.5
(22) Date of filing: 26.09.2018
(51) Int. Cl.: H04W 72/04, H04W 56/00

(54) **USER DEVICE**

(71) Applicant: NTT DOCOMO, INC., Chiyoda-ku Tokyo 100-6150 (JP)
(72) Inventor: UCHINO Tooru, Tokyo 100-6150 (JP); TAKAHASHI Hideaki, Tokyo 100-6150 (JP)
(74) Representative: Hoffmann Eitle
(86) International application number: PCT/JP2018/035821
(87) International publication number: WO 2020/065802

(57) **Abstract**

UE (100) sets a single transmission timing in simultaneous communication performed between a user equipment (100) and a plurality of radio base stations (200a, 200b) . The UE (100) transmits an uplink signal to the plurality of radio base stations (200a, 200b) by using the single transmission timing.

## Description

### TECHNICAL FIELD

The present invention relates to a user equipment capable of performing simultaneous communication with a plurality of radio base stations.

### BACKGROUND ART

3rd Generation Partnership Project (3GPP) specifies Long Term Evolution (LTE) , and with the aim of further speeding, specifies LTE-Advanced (hereinafter, the LTE includes the LTE-Advanced). Moreover, in the 3GPP, further, specification of a succeeding system of the LTE called 5G New Radio (NR), Next Generation (NG) or the like is being considered.

In the NR, Time Alignment control is performed (see Non-Patent Document 1). Specifically, in the Time Alignment control, in NR radio base station (gNB) , the transmission timing of an uplink signal is adjusted for each of user equipments (UEs) so that the reception timing of the uplink signal becomes the same in the UEs.

In the NR, in the case of Multi-RAT Dual Connectivity (MR-DC), in which the UE communicates simultaneously with NR radio base station (gNB) and LTE radio base station (eNB) , it is assumed that the UE performs the Time Alignment control by using a transmission timing set individually for each of the radio base stations (see Non-Patent Document 2).

### PRIOR ART DOCUMENT

### NON-PATENT DOCUMENT

Non-Patent Document 1: TS 38.321
Non-Patent Document 2: TS 37.340

### SUMMARY OF THE INVENTION

In the MR-DC, a configuration in which a component carrier (NR CC) set between the UE and the gNB and a component carrier (LTE CC) set between the UE and the eNB are continuous on frequency is proposed.

However, in such uplink transmission that uses continuous CCs on the frequency, from the view point of complication of terminal configuration and higher cost due to implementation of a plurality of FFT function units, it may be necessary to apply on the radio base station side the same First Fourier Transform (FFT) timing to the NR CC and the LTE CC.

Therefore, if the UE performs the Time Alignment control by using the transmission timing individually set from each of the radio base stations, it is not possible to apply the same FFT timing to the NR CC and the LTE CC on the radio base station side. That is, the mobile station may not be able to properly perform the uplink transmission.

The present invention has been made in view of the above discussion. It is one object of the present invention to provide a mobile station capable of transmitting, in simultaneous communication with a plurality of radio base stations, an uplink signal according to a transmission timing supported by a plurality of radio base stations.

A user equipment (100) according to one aspect of the present invention includes a control unit (105) that sets a single transmission timing in simultaneous communication performed between the user equipment (100) and a plurality of radio base stations (200a, 200b); and a transmitting unit (101) that transmits an uplink signal to the plurality of base stations by using the single transmission timing.

### BRIEF DESCRIPTION OF DRAWINGS

FIG. 1 is an overall schematic configuration diagram of a radio communication system 10.
FIG. 2 is a functional block diagram of UE 100.
FIG. 3 is a diagram for explaining Modeling 1 in transmission timing control.
FIG. 4 is a diagram showing a sequence of SN addition procedure performed by the UE 100, eNB 200a, and gNB 200b (Operation Example 1).
FIG. 5 is a diagram showing a sequence of the SN addition procedure performed by the UE 100, the eNB 200a, and the gNB 200b (Operation Example 2) .
FIG. 6 is a flowchart of Timing Advance command processing performed by the UE 100.
FIG. 7 is a diagram showing a flowchart of Time Alignment timer processing performed by the UE 100.
FIG. 8 is a diagram showing a flowchart of an abnormality processing of uplink transmission performed by the UE 100.
FIG. 9 is a diagram showing a flowchart of an abnormality processing of transmission timing adjustment performed by the UE 100.
FIG. 10 is a diagram for explaining Modeling 2 in the transmission timing control.
FIG. 11 is a diagram showing an example of a hardware configuration of the UE 100.

### DESCRIPTION OF EMBODIMENTS

Exemplary embodiments of the present invention will be explained below with reference to the accompanying drawings. Note that, the same or similar reference numerals have been attached to the same functions and configurations, and the description thereof is appropriately omitted.

### (1) Overall Schematic Configuration of Radio Communication System

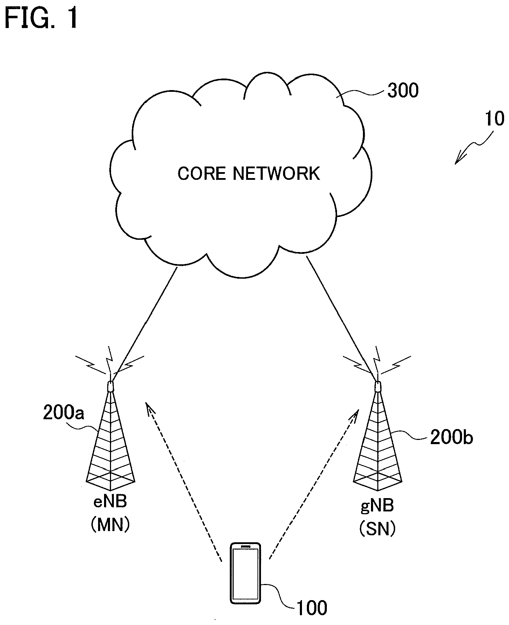

FIG. 1 is an overall schematic configuration diagram of a radio communication system 10 according to one embodiment. The radio communication system 10 is a radio communication system according to 5G Radio Access constituted by a combination of NR and LTE.

The radio communication system 10 includes a user equipment 100, LTE radio base station 200a (hereinafter, "eNB 200a"), NR radio base station 200b (hereinafter, "gNB 200b"), and a core network 300.

The UE 100 performs radio communication with the eNB 200a according to the LTE. The UE 100 performs radio communication with the gNB 200b according to the NR. The UE 100 performs simultaneous communication (Multi-RAT Dual Connectivity, MR-DC) with the eNB 200a and the gNB 200b by using one or more component carriers (hereinafter, "LTE CC") set between the UE 100 and the eNB 200a and one or more component carriers (hereinafter, "NR CC") set between the UE 100 and the gNB 200b.

In the present embodiment, the eNB 200a functions as a master node (MN) in the MR-DC. In the MR-DC, one or more cells subordinate to the MN are grouped into a master cell group (MCG) . In the MCG, a plurality of cells having substantially the same radio characteristics are grouped as one Timing Advance Group (TAG).

The gNB 200b is connected to the eNB 200a via X2 interface (not shown) . In the present embodiment, the gNB 200b functions as a secondary node (hereinafter, "SN") in the MR-DC. In the MR-DC, one or more cells subordinate to the SN are grouped into a secondary cell group (SCG) . In the SCG, a plurality of cells having substantially the same radio characteristics are grouped as one TAG.

Note that, a cell is also called a component carrier. Accordingly, in the following explanation, in order to make it clear that the LTE CC is the CC grouped in the MCG, the LTE CC is referred to as MCG CC as appropriate. Similarly, in the following explanation, in order to make it clear that the NR CC is the CC grouped in the SCG, the NR CC is referred to as SCG CC as appropriate.

It is allowable that the gNB 200b functions as the MN in the MR-DC. In this case, the eNB 200a functions as the SN in the MR-DC.

The core network 300 is Evolved Packet Core (EPC) specified in 3GPP. The core network 300 performs radio communication with the eNB 200a according to the LTE. The core network 300 performs radio communication with the gNB 200b according to the NR. The core network 300 communicates with the UE 100 via the eNB 200a or the gNB 200b.

The core network 300 is constituted by a plurality of nodes such as Mobility Management Entity (MME), Serving Gateway (S-GW), and the like (not shown). The MME performs mobility management and session management. The S-GW performs user data transmission.

Note that, the core network 300 may be 5GC that is defined as a new core network for 5G.

As explained later, in the present embodiment, when the MR-DC (hereinafter, "Sync DC") is performed by using the configuration in which the MCG CC set between the UE 100 and the eNB 200a (radio base station on MCG side) and the SCG CC set between the UE 100 and the gNB 200b (radio base station on SCG side) are continuous on frequency, the UE 100 sets a single transmission timing.

Here, "configuration in which MCG and SCG are continuous on frequency" means that the MCG CC and the SCG CC are arranged adjacent to each other on frequency so that they form one continuous frequency band. Moreover, the "single transmission timing" means a transmission timing that is commonly used between the radio base station on MCG side and the radio base station on SCG side.

However, the present embodiment is not limited to this. Even in the case where the MR-DC is performed by using a configuration in which the MCG CC and the SCG CC are not continuous on frequency, for example, if it is necessary to apply the same FFT timing to the MCG CC and the SCG CC on the side of the radio base station, the UE 100 can set the single transmission timing explained later. Also, the present embodiment is not limited to the case related to different CCs. The present embodiment can be generally applied to a case where different frequencies on frequency are used, including different BWPs (Band Width Part) in the same CC.

### (2) Functional Block Configuration of UE 100

A functional block configuration of the UE 100 will be explained below. Only portions related to features in the present embodiment will be explained here. Therefore, it is a matter of course that the network includes other functional blocks not directly related to the features in the present embodiment.

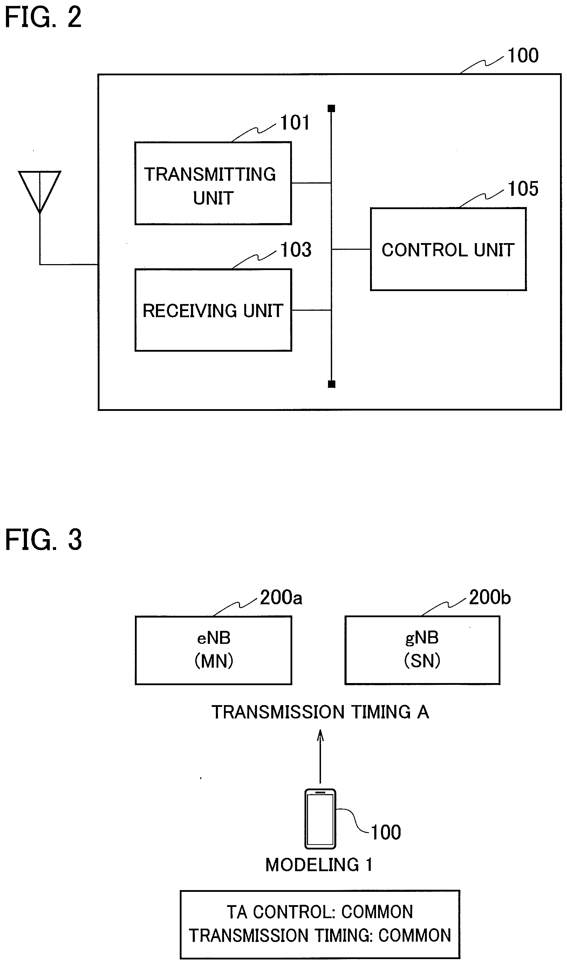

FIG. 2 is a functional block diagram of the UE 100. A hardware configuration of the UE 100 will be explained later. As shown in FIG. 2, the UE 100 includes a transmitting unit 101, a receiving unit 103, and a control unit 105.

The transmitting unit 101 transmits to the eNB 200a an uplink signal according to the LTE. The transmitting unit 101 transmits to the gNB 200b an uplink signal according to the NR.

The transmitting unit 101 transmits, in the Sync DC, an uplink signal to the eNB 200a and the gNB 200b by using the single transmission timing set by the control unit 105.

The transmitting unit 101 transmits RRC Connection Reconfiguration Complete to the eNB 200a in SN addition procedure of the gNB 200b. The transmitting unit 101 performs, in the SN addition procedure of the gNB 200b, with respect to the gNB 200b, Physical Random Access Channel (PRACH) transmission, Physical Uplink Shared Channel (PUSCH) transmission, Physical Uplink Control Channel (PUCCH) transmission, Sounding Reference Signal (SRS) transmission, and the like.

The transmitting unit 101 notifies the core network 300 of detection of an abnormality in the uplink transmission. The transmitting unit 101 notifies the core network 300 of detection of an abnormality in transmission timing adjustment.

The receiving unit 103 receives from the eNB 200a a downlink signal according to the LTE. The transmitting unit 101 transmits from the gNB 200b a downlink signal according to the NR.

The receiving unit 103 receives from the eNB 200a RRC Connection Reconfiguration in the SN addition procedure of the gNB 200b. The receiving unit 103 receives from the gNB 200b a random access response in the SN addition procedure of the gNB 200b.

The receiving unit 103 periodically receives Timing Advance command for MCG from the eNB 200a (radio base station on MCG side). The Timing Advance command for MCG is commonly used within the TAG to which the MCG CC belongs.

The receiving unit 103 periodically receives Timing Advance command for SCG from the gNB 200b (radio base station on SCG side). The Timing Advance command for SCG is commonly used within the TAG to which the SCG CC belongs.

The control unit 105 sets, in the Sync DC, as explained later in Modeling 1 and Modeling 2, a single transmission timing. In Modeling 1, the control unit 105 adjusts, assuming that the MCG CC and the SCG CC belong to the same TAG, a single transmission timing A based on the Timing Advance command for MCG or the Timing Advance command for SCG received immediately before.

In Modeling 2, the control unit 105 sets, as the single transmission timing in the Sync DC, one transmission timing between a transmission timing B established between the UE 100 and the eNB 200a (radio base station on MCG side), and a transmission timing C established between the UE 100 and the gNB 200b (radio base station on SCG side).

In Modeling 2, the control unit 105 individually adjusts the transmission timing B based on the Timing Advance command for MCG. In Modeling 2, the control unit 105 individually adjusts the transmission timing C based on the Timing Advance command for SCG.

In the SN addition procedure, when the single transmission timing is set between the UE 100 and the radio base station on MCG side, the control unit 105 ignores the Timing Advance command for SCG notified thereto in the random access response.

In the SN addition procedure, when the single transmission timing is set between the UE 100 and the radio base station on MCG side, the control unit 105 can perform the PRACH transmission by using this transmission timing. In this case, for example, the control unit 105 adjusts the transmission timing by using the Timing Advance command for SCG notified thereto in the random access response.

In the SN addition procedure, when the single transmission timing is set between the UE 100 and the radio base station on MCG side, the control unit 105 can instruct the transmitting unit 101 to transmit the uplink signal without performing a random access procedure.

In Timing Advance command processing, the control unit 105 associates a subcarrier interval usable in the MCG CC or the SCG CC with the Timing Advance command, and calculates the timing adjustment value for the single transmission timing based on this association.

In Time Alignment timer processing, the control unit 105 starts or restarts, based on reception of the Timing Advance command for MCG, Time Alignment timer for MCG, or the Time Alignment timer for MCG and Time Alignment timer for SCG.

Similarly, in the Time Alignment timer processing, the control unit 105 starts or restarts, based on the reception of the Timing Advance command for SCG, the Time Alignment timer for SCG, or the Time Alignment timer for MCG and the Time Alignment timer for SCG.

In this way, upon receiving the Timing Advance command, the control unit 105 starts or restarts the corresponding Time Alignment timer. Note that, when the state in which the Timing Advance command is not received continues whereby the measurement time of the corresponding Time Alignment timer reaches a threshold value, that is, when the Time Alignment timer expires, the control unit 105 releases the individual radio resources (for example, PUCCH, SRS, etc.) allocated to the UE 100.

When data in uplink or downlink is generated, the UE 100 that released the radio resource needs to re-perform the random access procedure with the radio base station and get allocated the radio resource from the radio base station.

The control unit 105 performs detection of the abnormality in the uplink transmission.

The control unit 105 detects the abnormality in the transmission timing adjustment. Specifically, as a result of adjusting the single transmission timing based on the Timing Advance command for MCG or the Timing Advance command for SCG if the difference between the transmission timing before the adjustment and the transmission timing after the adjustment is larger than a predetermined value, the control unit 105 invalidates the adjustment or stops the uplink transmission.

### (3) Operation of Radio Communication System

The operation of the radio communication system 10 will be explained below. Specifically, the operation related to the transmission timing control in the Sync DC will be explained.

Note that, the transmission timing control of Modeling 1 and Modeling 2 explained later is not limited to the Sync DC. Such control is also applicable, with the single transmission timing as the reference, to the case where the uplink transmission timing control is performed with respect to the TAG, the cell, or the component carrier belonging to different cell groups (for example, MCG, SCG) in the MR-DC.

### (3.1) Modeling 1 in Transmission Timing Control

FIG. 3 is a diagram for explaining Modeling 1 in the transmission timing control. In Modeling 1, in the Sync DC, the UE 100 sets the single transmission timing A. The UE 100 transmits, by using the set transmission timing A, the uplink signal to the eNB 200a (radio base station on MCG side) and the gNB 200b (radio base station on SCG side).

The UE 100 refers to a timing reference cell in order to set the single transmission timing A. For example, as the timing reference cell, the UE 100 refers to a special cell (SpCell, specifically PCell) in the MCG or a special cell (SpCell, specifically PSCell) in the SCG. However, the present embodiment is not limited to this configuration. That is, as the timing reference cell, the UE 100 may refer to a cell in the MCG, a cell in the SCG, or a cell designated from the core network 300.

As the timing reference cell, the UE 100 can refer to a cell that is determined to have good quality based on Reference Signal Received Power (RSRP), Reference Signal Received Quality (RSRQ), Signal-to-Interference Noise Ratio (SINR), Channel Quality Indicator (CQI), or the like.

When the radio characteristics of the MCG CC are substantially the same as the radio characteristics of the SCG CC, the UE 100 refers to the above-mentioned timing reference cell and sets the single transmission timing A. Accordingly, the UE 100 can transmit the uplink signal at the transmission timing supported by the radio base station on MCG side and the radio base station on SCG side.

In Modeling 1, based on the Timing Advance command for MCG received immediately before from the eNB 200a (radio base station on MCG side) or the Timing Advance command for SCG received immediately before from the gNB 200b (radio base station on SCG side) , the UE 100 performs Time Alignment control for adjusting the transmission timing A.

Note that, if the transmission timing A can be always adjusted appropriately only by using one Timing Advance command between the Timing Advance command for MCG and the Timing Advance command for SCG, the UE 100 can ignore the other Timing Advance command.

In Modeling 1, in uplink simultaneous transmission, the UE 100 can perform the Time Alignment control for adjusting the single transmission timing used in the uplink transmission using MCG CC based on the Timing Advance Command for MCG received immediately before from the eNB 200a (radio base station on MCG side) and adjusting the single transmission timing used in the uplink transmission using SCG CC based on the Timing Advance Command for SCG received immediately before from the gNB 200b (radio base station on SCG side).

In this case, in the uplink simultaneous transmission, the UE 100 performs the uplink transmission using MCG CC at the single transmission timing adjusted immediately before by using the Timing Advance command for MCG, and performs the uplink transmission using SCG CC at the single transmission timing adjusted immediately before by using the Timing Advance command for SCG.

In Modeling 1, the UE 100 can use an intermediate value between a timing adjustment value calculated based on the immediately before Timing Advance command for MCG and a timing adjustment value calculated based on the immediately before Timing Advance command for SCG (or a value obtained by applying a weight to each of these values) to adjust the transmission timing.

In this manner, in the Sync DC, the UE 100 considers that the radio characteristics of the MCG CC are substantially the same as the radio characteristics of the SCG CC, and controls the transmission timing for the MCG CC and the SCG CC as the CC in the same TAG.

Hereinafter, the random access procedure, the Timing Advance command processing, the Time Alignment timer processing, an abnormality processing of uplink transmission, and an abnormality processing of transmission timing adjustment in Modeling 1 will be explained below in order.

### (3.1.1) Random Access Procedure

In the conventional MR-DC, the UE 100 performs the Time Alignment control by using a transmission timing individually set for each of the radio base stations. Therefore, the UE 100 must perform a random access procedure in the SN addition procedure for the gNB 200b to establish the transmission timing again between the UE 100 and the gNB 200b.

However, in Modeling 1, when the transmission timing A has already been set as the transmission timing of the uplink signal for the eNB 200a (radio base station on MCG side) , the UE 100 can apply the same transmission timing A as the transmission timing of the uplink signal for the gNB 200b (radio base station on SCG side).

Therefore, when the random access procedure is triggered on the gNB 200b side due to addition of the gNB 200b, expiration of the Time Alignment timer on the gNB 200b side, uplink out-of-synchronization (UL data resuming) on the gNB 200b side, or the like, the UE 100 performs a control according to Operation Examples 1 and 2 explained below. The SN addition procedure of the gNB 200b will be explained below as an example.

### (3.1.1.1) Operation Example 1

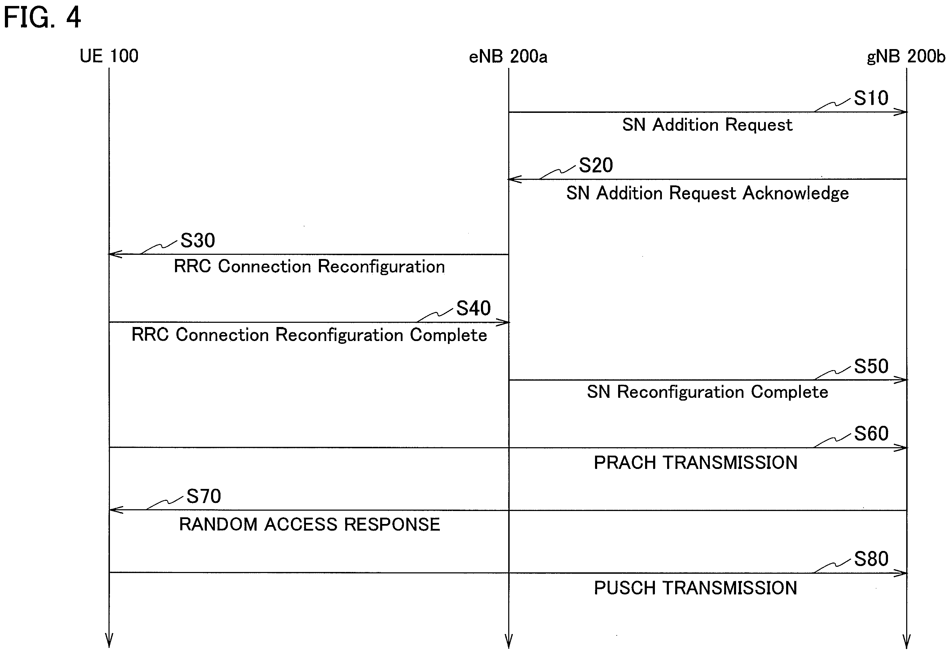

FIG. 4 is a diagram showing a sequence of the SN addition procedure performed by the UE 100, the eNB 200a, and the gNB 200b. In this example, the UE 100 performs the random access procedure with the gNB 200b.

As shown in FIG. 4, the eNB 200a transmits SN Addition Request to the gNB 200b (Step S10) . The gNB 200b transmits SN Addition Request Acknowledge to the eNB 200a as a response to the SN Addition Request (Step S20) . The SN Addition Request Acknowledge contains an identifier of the gNB 200b.

The eNB 200a adds the identifier of the gNB 200b, which is contained in the SN Addition Request Acknowledge, in RRC Connection Reconfiguration and transmits the RRC Connection Reconfiguration to the UE 100 (Step S30). In response to the RRC Connection Reconfiguration, the UE 100 transmits RRC Connection Reconfiguration Complete to the eNB 200a (Step S40) . The eNB 200a transmits SN Reconfiguration Complete to the gNB 200b (Step S50) . With this processing, the UE 100 can perform communication with the gNB 200b.

The UE 100 performs the PRACH transmission to the gNB 200b and starts the random access procedure (Step S60) . In the PRACH transmission, the UE 100 transmits the identifier of the gNB 200b, which is received from the eNB 200a, to the gNB 200b. As a result, the gNB 200b determines that the UE 100 has connected to the gNB 200b. Also, the gNB 200b starts scheduling for the UE 100 at the timing of receiving the PRACH transmission. In the PRACH transmission, for example, the UE 100 performs the PRACH transmission with NTA=0.

The gNB 200b transmits a random access response to the UE 100 (Step S70). The gNB 200b adds the Timing Advance command for SCG in the random access response. However, because the transmission timing A can be applied to the gNB 200b, the UE 100 ignores the Timing Advance command for SCG notified from the gNB 200b.

The UE 100 performs the PUSCH transmission to the gNB 200b by using the transmission timing A established between the UE 100 and the eNB 200a (Step S80).

Note that, if the transmission timing A is set as the transmission timing of the uplink signal for the eNB 200a before performing the random access procedure with the gNB 200b, at Step S60, the UE 100 can perform the PRACH transmission to the gNB 200b by using the transmission timing A. In this case, at Step S70, the UE 100 can apply to the transmission timing A the Timing Advance command for SCG contained in the random access response. As a result, the UE 100 can adjust the transmission timing A by using the Timing Advance command for SCG notified thereto in the random access response.

### (3.1.1.2) Operation Example 2

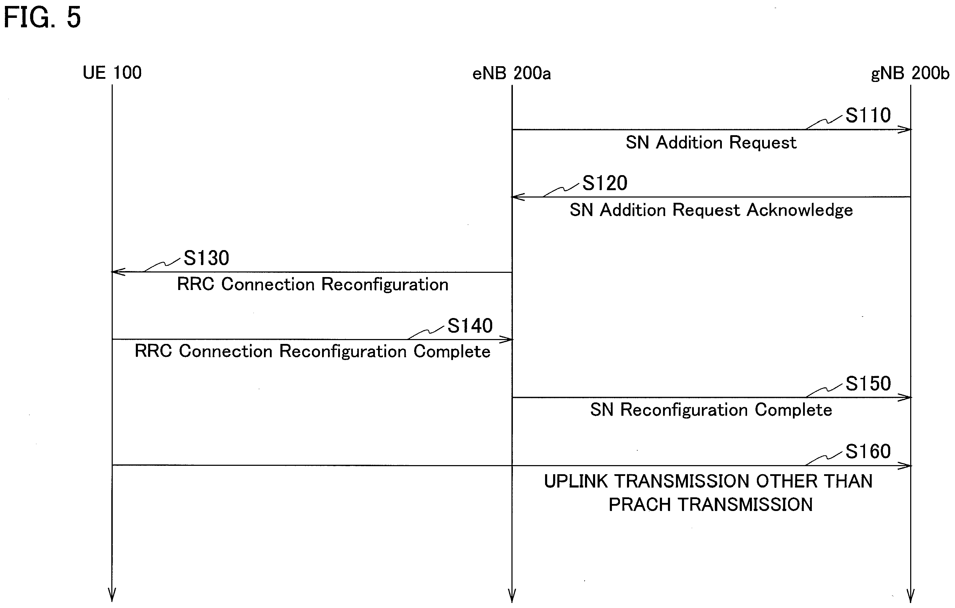

FIG. 5 is a diagram showing a sequence of the SN addition procedure performed by the UE 100, the eNB 200a, and the gNB 200b. In this example, the UE 100 does not perform the random access procedure with the gNB 200b.

The processing from Steps S110 to S150 shown in FIG. 5 is the same as the processing from Steps S10 to S50 shown in FIG. 4, so that the explanation of these steps will be omitted. When the UE 100 transmits the RRC Connection Reconfiguration Complete to the eNB 200a (Step S140), the UE 100 performs the uplink transmission other than the PRACH transmission to the gNB 200b by using the transmission timing A established between the UE 100 and the eNB 200a (Step S160) . As a result, the UE 100 performs the uplink transmission to the gNB 200b without performing the random access procedure with the gNB 200b.

Specifically, at Step S160, the UE 100 performs the uplink transmission such as the PUSCH transmission, PUCCH transmission, or SRS transmission to the gNB 200b. For example, the UE 100 can transmit PUCCH-SR to the gNB 200b to make a scheduling request. Moreover, the UE 100 receives UL grant from the gNB 200b via Physical Downlink Control Channel (PDCCH) transmission, Radio Resource Control (RRC) message, or the like, and when the PUSCH resource has been allocated, the UE 100 can perform the PUSCH transmission by using this resource. Furthermore, the UE 100 can perform Configured grant transmission to the gNB 200b.

Note that, in the SN addition procedure, in order to avoid expiration of the Time Alignment timer for MCG before the UE 100 connects to the gNB 200b, the core network 300 can notify the UE 100, which is performing the SN addition procedure, of an instruction to restart the Timing Advance command for MCG. As a result, the UE 100 can avoid expiration of the Time Alignment timer for MCG.

The UE 100 can switch, in the SN addition procedure, between Operation Example 1 and Operation Example 2 according to an instruction from the core network 300. Note that, the UE 100 can receive an instruction from the core network 300 via one of RRC, MAC, and PHY layers.

In Operation Examples 1 and 2, it is assumed that the random access is triggered on the gNB 200b side while the transmission timing A has been established on the eNB 200a side; however, the present invention is not limited to this method. For example, Operation Examples 1 and 2 can be applied to a case where the random access is triggered on the eNB 200a side while the transmission timing A has been established on the gNB 200b side.

### (3.1.2) Timing Advance Command Processing

In Modeling 1, the UE 100 performs the Time Alignment control for adjusting the transmission timing A based on the Timing Advance command for MCG or Timing Advance command for SCG received immediately before.

Currently, the subcarrier interval on the frequency in the LTE is only 15 kHz, whereas the subcarrier interval on the frequency in the NR is available in five types of 15 kHz, 30 kHz, 60 kHz, 120 kHz, and 240 kHz. Therefore, when the Timing Advance command is applied to the transmission timing A, the issue is which subcarrier interval should be used to calculate the timing adjustment value.

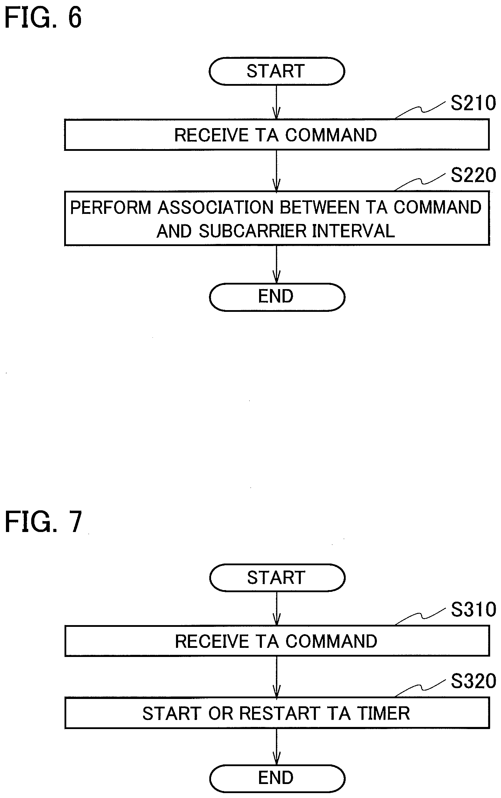

FIG. 6 is a flowchart of the Timing Advance command processing performed by the UE 100. As shown in FIG. 6, the UE 100 receives the Timing Advance command for MCG or the Timing Advance command for SCG (shown as "TA command" in FIG. 6) (Step S210) . When the UE 100 receives the Timing Advance command for MCG from the eNB 200a, the UE 100 associates the received Timing Advance command for MCG with the subcarrier interval of 15 kHz to calculate the timing adjustment value (Step S220).

On the other hand, when the UE 100 receives the Timing Advance command for SCG from the gNB 200b, according to the provision of Section 4.2 of TS 38.213, among the plurality of subcarrier intervals usable in the NR CC set between the UE 100 and the gNB 200b, the UE 100 calculates the timing adjustment value by associating the received Timing Advance command for SCG with the longest subcarrier interval (S220).

Note that, at Step S220, the UE 100 can uniformly associate the Timing Advance command for MCG and the Timing Advance command for SCG with the longest subcarrier interval among the plurality of subcarrier intervals usable in the NR CC set between the UE 100 and the gNB 200b to calculate the timing adjustment value. With this operation, the UE 100 can adjust the transmission timing in the shortest time unit.

Also, at Step S220, the UE 100 can uniformly associate the Timing Advance command for MCG and the Timing Advance command for SCG based on the subcarrier interval applied in the MCG CC. For example, when the MCG CC is the LTE CC, the UE 100 associates the received Timing Advance command with the subcarrier interval of 15 kHz. On the other hand, when the MCG CC is the NR CC, the UE 100 associates the received Timing Advance command with the longest subcarrier interval among the available subcarrier intervals.

At Step S220, it is allowable that the UE 100 receives a designation from the core network 300 as to which subcarrier interval is to be used to calculate the timing adjustment value.

### (3.1.3) Time Alignment Timer Processing

FIG. 7 is a diagram showing a flowchart of the Time Alignment timer processing performed by the UE 100. As shown in FIG. 7, the UE 100 receives the Timing Advance command for MCG or the Timing Advance command for SCG (shown as "TA command" in FIG. 7) (Step S310). Upon receiving the Timing Advance command for MCG, the UE 100 starts or restarts the Time Alignment timer for MCG (Step S320) . On the other hand, upon receiving the Timing Advance command for SCG, the UE 100 starts or restarts the Time Alignment timer for SCG (Step S320).

At Step S320, upon receiving the Timing Advance command for MCG, the UE 100 can start or restart the Time Alignment timer for MCG and the Time Alignment timer for SCG. Similarly, at Step S320, upon receiving the Timing Advance command for SCG, the UE 100 can start or restart the Time Alignment timer for MCG and the Time Alignment timer for SCG.

### (3.1.4) Abnormality Processing of Uplink Transmission

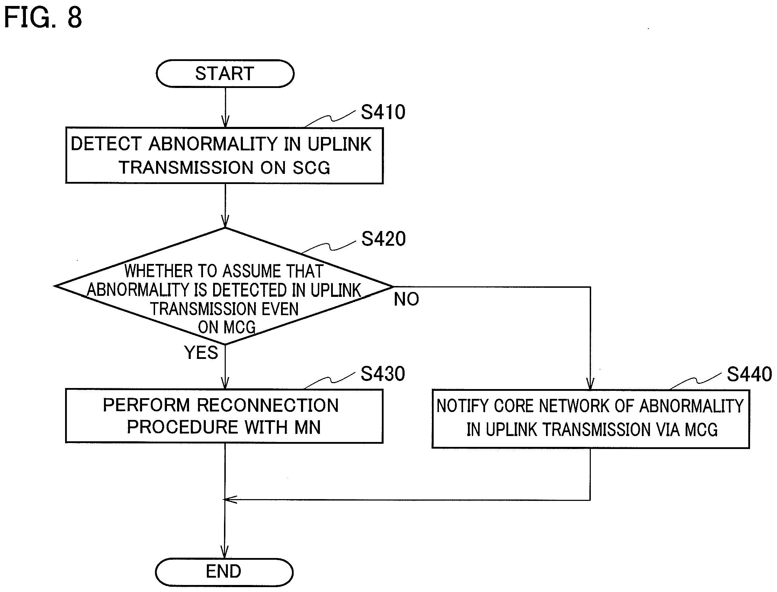

FIG. 8 is a diagram showing a flowchart of the abnormality processing of uplink transmission performed by the UE 100. As shown in FIG. 8, the UE 100 detects the abnormality in the uplink transmission on the SCG CC set between the UE 100 and the gNB 200b (Step S410) . The abnormality in the uplink transmission can be, for example, the abnormality in the random access procedure. Specifically, the situation in which, because the downlink transmission power is weak, the UE 100 cannot recognize RACH signal from the gNB 200b, because the UE 100 cannot receive the random access response, the UE 100 repeatedly transmits the RACH signal, and the like can be considered.

The UE 100 determines whether to assume that the abnormality is detected in the uplink transmission even on the MCG CC set between the UE 100 and the eNB 200a (Step S420) . Upon assuming that the abnormality is detected in the uplink transmission also on the MCG CC, the UE 100 performs a reconnection procedure with the eNB 200a that is the radio base station on MCG side (MN) (Step S430).

Also, in the case of exceeding the retransmission of the scheduling request transmitted on the PUCCH as the abnormality in the uplink transmission, it is allowable to similarly perform the corresponding abnormality detection operation on the SCG side. Specifically, it is allowable to assume that the corresponding Time Alignment timer has expired or perform the random access procedure. At this time, a cell or a component carrier for performing the random access procedure can be designated from the core network, or such a cell or a component carrier can be a cell or a component carrier for which the timing for transmitting the PRACH signal reaches most early.

At Step S420, when the MCG CC is grouped in a primary TAG (pTAG) in the MCG or the MCG CC is a primary cell (PCell) in the MCG, the UE 100 can assume, even in the MCG CC, that the abnormality is detected in the uplink transmission.

Therefore, for example, when the MCG CC is grouped in a secondary TAG (sTAG) in the MCG and start and restart of the Time Alignment timer for MCG and start and restart of the Time Alignment timer for SCG are associated with each other, at Step S430, the UE 100 forcibly stops the Time Alignment timer for MCG or assumes that the Time Alignment timer for MCG has expired without performing the reconnection procedure with the eNB 200a.

On the other hand, if it is not to assume that the abnormality is detected in the uplink transmission even on the MCG CC, the UE 100 notifies the core network 300 of the detection of the abnormality in the uplink transmission on the SCG CC via the MCG (Step S440). In this case, the UE 100 maintains the state of the Time Alignment timer for MCG.

Therefore, for example, when start and restart of the Time Alignment timer for MCG and start and restart of the Time Alignment timer for SCG are associated with each other, at Step S440, the UE 100 does not forcibly stop the Time Alignment Timer for SCG.

Note that, the UE 100 can perform Step S430 directly without performing the determination at Step S420 but with assuming, at Step S420, that the abnormality in the uplink transmission is also detected on the MCG CC. Instead, the UE 100 may directly perform Step S440 without assuming, at Step S420, that the abnormality in the uplink transmission was detected on the MCG CC.

### (3.1.5) Abnormality Processing of Transmission Timing Adjustment

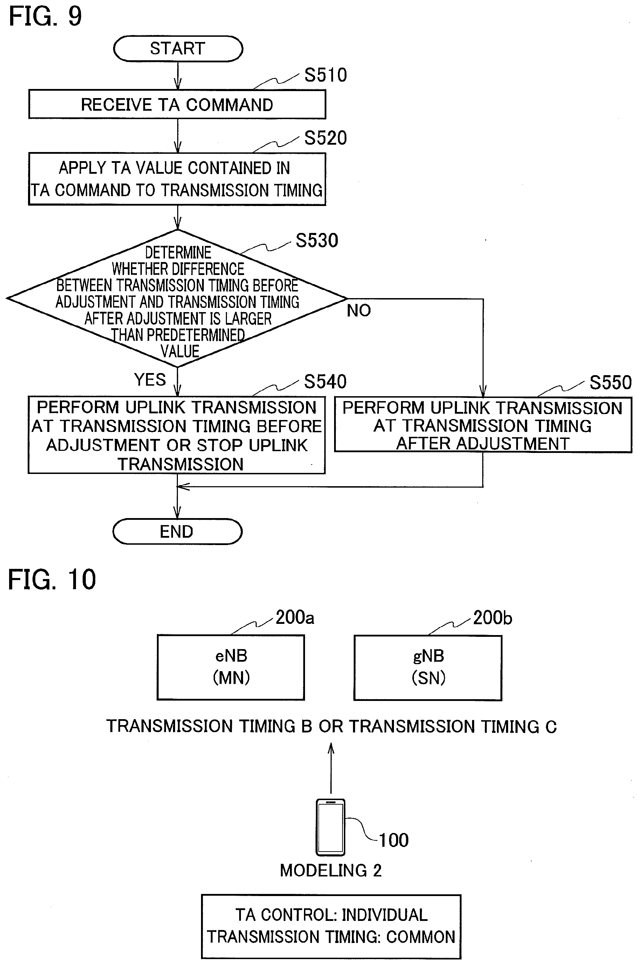

FIG. 9 is a diagram showing a flowchart of the abnormality processing of the transmission timing adjustment performed by the UE 100. As shown in FIG. 9, the UE 100 receives the Timing Advance command for MCG or the Timing Advance command for SCG (shown as "TA command" in FIG. 9) (Step S510).

The UE 100 performs the Time Alignment control to adjust the transmission timing A based on the Timing Advance command for MCG or the Timing Advance command for SCG (Step S520) . Specifically, the UE 100 adjusts the transmission timing A by applying the timing adjustment value contained in the received Timing Advance command to the transmission timing A.

The UE 100 determines whether the difference between the transmission timing A before the adjustment and the transmission timing A after the adjustment is larger than the predetermined value (Step S530).

If the difference is larger than the predetermined value, the UE 100 performs the uplink transmission at the transmission timing A before adjustment or stops the uplink transmission (Step S540) . At Step S540, the UE 100 can transmit a specific uplink signal (for example, the PRACH signal) . On the other hand, if the difference is smaller than the predetermined value, the UE 100 performs the uplink transmission at the transmission timing A after adjustment (Step S550).

At Step S540, the UE 100 can notify the core network 300 of the abnormality detection of the transmission timing adjustment via one of the RRC, MAC, and PHY layers.

In the above-mentioned abnormality processing flow, although it is mentioned that the UE 100 detects the abnormality in the transmission timing adjustment as a result of adjusting the transmission timing A based on the Timing Advance command, the present invention is not limited to this method. For example, the UE 100 can assume that the abnormality in the transmission timing adjustment is detected when the difference in the reception timings of the downlink has become large.

### (3.2) Modeling 2 in Transmission Timing Control

FIG. 10 is a diagram for explaining Modeling 2 in the transmission timing control. In Modeling 2, the UE 100 manages the transmission timing B established between the UE 100 and the eNB 200a (radio base station on MCG side) and the transmission timing C established between the UE 100 and the gNB 200b (radio base station on SCG side). The UE 100 sets, in the Sync DC, one of the transmission timing B and the transmission timing C. The UE 100 transmits the uplink signal to the eNB 200a and the gNB 200b by using the set transmission timing.

Furthermore, in Modeling 2, the UE 100 performs Time Alignment control to individually adjust the transmission timing B based on the Timing Advance command for MCG. Similarly, the UE 100 performs the Time Alignment control to individually adjust the transmission timing C based on the Timing Advance command for SCG.

Hereinafter, the random access procedure, the Timing Advance command processing, the Time Alignment timer processing, the abnormality processing of uplink transmission, the abnormality processing of transmission timing adjustment, and a determination method of the transmission timing in Modeling 2 will be sequentially explained below.

### (3.2.1) Random Access Procedure

In Modeling 2, in the same manner as in Modeling 1, in the Sync DC, the UE 100 sets one of the transmission timing B and the transmission timing C as the single transmission timing. Accordingly, the same control as the random access procedure in Modeling 1 can be applied to the random access procedure in Modeling 2. Therefore, the detailed explanation will be omitted.

### (3.2.2) Timing Advance Command Processing

When individually adjusting the transmission timing B based on the Timing Advance command for MCG transmitted from the eNB 200a, the UE 100 associates the Timing Advance command for MCG with the subcarrier interval of 15 kHz and calculates the timing adjustment value.

On the other hand, when individually adjusting the transmission timing C based on the Timing Advance command for SCG transmitted from the gNB 200b, according to the provision of Section 4.2 of TS 38.213, among the plurality of subcarrier intervals usable in the NR CC set between the UE 100 and the gNB 200b, the UE 100 calculates the timing adjustment value by associating the Timing Advance command for SCG with the longest subcarrier interval.

### (3.2.3) Time Alignment Timer Processing

Upon receiving the Timing Advance command for MCG from the eNB 200a, the UE 100 starts or restarts the Time Alignment timer for MCG. Similarly, upon receiving the Timing Advance command for SCG from the gNB 200b, the UE 100 starts or restarts the Time Alignment timer for SCG.

The UE 100 can associate the state of the Time Alignment timer for MCG and the state of the Time Alignment timer for SCG with each other. Specifically, if the Time Alignment timer for MCG has been started, the UE 100 may also start the Time Alignment timer for SCG at the point in time the Sync DC is set.

As a result, if any one of the Time Alignment timers is active, the UE 100 can assume that the transmission timing B and the transmission timing C are established.

The UE 100 can determine, from a combination of the bands used in the MR-DC, whether the state of the Time Alignment timer for MCG and the state of the Time Alignment timer for SCG can be associated with each other. For example, when the combination of the bands used in the MR-DC are configured so as to be continuous on the frequency, the UE 100 associates the state of the Time Alignment timer for MCG and the state of the Time Alignment timer for SCG with each other.

The UE 100 can determine whether the state of the Time Alignment timer for MCG and the state of the Time Alignment timer for SCG can be associated with each other based on an instruction from the core network 300. For example, the UE 100 receives from the core network 300 information (for example, ServCellindex, mapping information of the TAG identifier and the like, the same identifier number) relating the state of the Time Alignment timer.

### (3.2.4) Abnormality Processing of Uplink Transmission

For the abnormality processing of uplink transmission in Modeling 2, the control that is the same as that for the abnormality processing of uplink transmission in Modeling 1 is applied. Therefore, the detailed explanation will be omitted.

### (3.1.5) Abnormality Processing of Transmission Timing Adjustment

For the abnormality processing of transmission timing adjustment in Modeling 2, the control that is the same as that for the abnormality processing of transmission timing adjustment in Modeling 1 is applied. Therefore, the detailed explanation will be omitted.

### (3.2.6) Determination Method of Transmission Timing

The UE 100 sets the single transmission timing based on the following criteria.

The UE 100 sets the transmission timing established between the UE 100 and the radio base station on MCG side as a single transmission timing. Specifically, the MCG is defined as a cell group including Pcell, a cell group including cells directly receiving broadcast information, or a cell group supporting a node having C-plane connection with the core network 300.

The UE 100 can set as the single transmission timing the transmission timing on the cell group side including the cell designated by the core network 300. Alternatively, the UE 100 can set as the single transmission timing the transmission timing on the cell group side including the cell to which the specific identifier has been assigned.

The UE 100 can set as the single transmission timing the transmission timing on the cell group side including the cell in which the latest Timing Advance command is transmitted via at least one of the random access response and the Timing Advance command MAC CE. Moreover, the UE 100 can set as the single transmission timing the transmission timing on a cell group side including a cell that communicates a physical signal including a control signal such as RRC, MAC CE, and the like, or a cell that communicates in a high-priority physical channel such as PUSCH, PRACH, and PUCCH.

Note that, for the radio base station on the cell group side whose transmission timing was not set as the single transmission timing, the UE 100 transmits the uplink signal by using the single transmission timing; however, the method is not limited thereto. For example, the UE 100 can stop the uplink transmission for such a radio base station. In this case, the UE 100 notifies the core network 300 that the uplink transmission has been stopped.

### (4) Advantageous Effects

In the embodiments explained above, in the simultaneous communication performed between the UE 100, the eNB 200a, and the gNB 200b, the UE 100 sets the single transmission timing and transmits the uplink signal to the eNB 200a and the gNB 200b by using this single transmission timing.

With this configuration, when the radio characteristics of the LTE CC (MCG CC) and the radio characteristics of the NR CC (SCG CC) used for the simultaneous communication are substantially the same, the reception timing of the uplink signal between the eNB 200a and the gNB 200b can be matched.

For this reason, for example, even if it is necessary to apply the same FFT timing for the LTE CC (MCG CC) and the NR CC (SCG CC) on the radio base station side from the view point of complication of terminal configuration and higher cost because of the implementation of a plurality of FFT function units, the uplink transmission can be performed appropriately.

In this manner, in the simultaneous communication performed between the UE 100, the eNB 200a, and the gNB 200b, the UE 100 can transmit the uplink signal based on the transmission timing supported by the eNB 200a and the gNB 200b.

The UE 100 receives the Timing Advance command from the eNB 200a and the gNB 200b, and adjusts the single transmission timing based on this Timing Advance command.

With this configuration, because the UE 100 can adjust, based on the Timing Advance command, the single transmission timing so that the deviation of the reception timing on the radio base station side due to the propagation delay between the UEs is within the predetermined time, the uplink transmission can be performed more appropriately.

The UE 100 associates the subcarrier interval usable in the LTE CC (MCG CC) or the NR CC (SCG CC) with the Timing Advance command, and calculates the timing adjustment value for the single transmission timing based on this association.

With this configuration, because the UE 100 can more precisely adjust the single transmission timing based on the Timing Advance command, the uplink transmission can be performed more appropriately.

Based on the reception of the Timing Advance command, the UE 100 starts the Time Alignment timer associated with the Timing Advance command and starts or restarts the Time Alignment timer associated with other Timing Advance command.

With this configuration, the UE 100 can share the state of the Time Alignment timer for MCG and the state of the Time Alignment timer for SCG by associating the Time Alignment timer for MCG with the Time Alignment timer for SCG. Therefore, if at least one of the Time Alignment timers is in started state, the UE 100 can avoid uplink out-of-synchronization between the UE 100 and the eNB 200a and between the UE 100 and the gNB 200b, so that the uplink transmission can be performed more appropriately.

After adjustment of the single transmission timing, if the difference between the transmission timing before the adjustment and the transmission timing after the adjustment is larger than the predetermined value, the UE 100 invalidates the adjustment or stops the uplink transmission.

With this configuration, because the UE 100 invalidates the adjustment or stops the uplink transmission when an abnormality is detected in the adjustment of the single transmission timing, the uplink transmission can be performed more appropriately.

When the single transmission timing has been set, the UE 100 transmits an uplink signal to the newly added gNB 200b without performing the random access procedure.

With this configuration, because it is possible to omit the random access procedure, the communication between the UE 100 and the gNB 200b can be started earlier.

The UE 100 applies the transmission timing established between the UE 100 and the eNB 200a or between the UE 100 and the gNB 200b as the single transmission timing.

Even with this configuration, when the radio characteristics of the LTE CC (MCG CC) and the radio characteristics of the NR CC (SCG CC) used for the simultaneous communication are substantially the same, the reception timing of the uplink signal between the eNB 200a and the gNB 200b can be matched.

### (5) Other Embodiments

Although the contents of the present invention have been described by way of the embodiments, it is obvious to those skilled in the art that the present invention is not limited to what is written here and that various modifications and improvements thereof are possible.

In the above embodiments, the UE 100 performed the Sync DCC by using two cell groups such as the MCG and the SCG; however, the present invention is not limited thereto. For example, the UE 100 can perform the Sync DC by using three or more cell groups. In this case, the UE 100 determines which cell group is to be treated as the cell group corresponding to the MCG.

Specifically, the UE 100 determines, as the cell group corresponding to the MCG, a cell group that satisfies the above-described definition of the MCG among the three cell groups . Other than this, the UE 100 can determine the cell group including the cells subordinate to the LTE radio base station, the cell group initially set, the cell group having the specific identifier, a cell group designated from the core network 300, and the like as the cell group corresponding to the MCG.

It is also conceivable that two or more SCGs exist among three or more cell groups. In this case, in the abnormality processing of uplink transmission, when the UE 100 detects the abnormality in the uplink transmission with one SCG included in the two or more SCGs, the UE 100 can forcibly stop the Time Alignment timer of the other SCG that is associated with the Time Alignment timer of the SCG with which the abnormality in the uplink transmission is detected.

In this case, the UE 100 can notify the core network 300 of the detection of the abnormality in the uplink transmission via the MCG or other SCG in which the single transmission timing has not been set.

Moreover, the block diagram used for explaining the embodiments (FIG. 2) shows blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

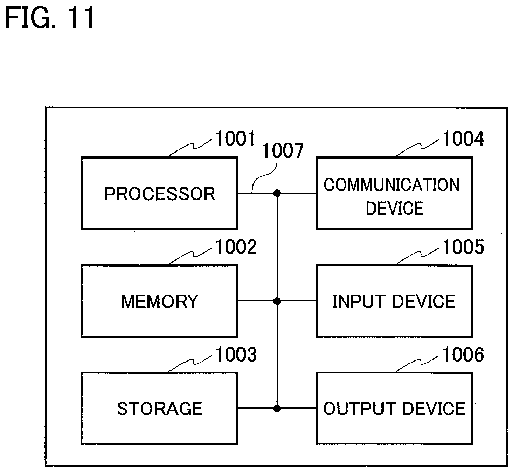

Furthermore, the UE 100 explained above can function as a computer that performs the processing of the radio communication method of the present disclosure. FIG. 11 is a diagram showing an example of a hardware configuration of the device. As shown in FIG. 11, the device can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

The functional blocks of the device can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the device by controlling communication via the communication device 1004, and controlling at least one of reading and writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from at least one of the storage 1003 and the communication device 1004 into the memory 1002, and executes various processes according to them. As the computer program, a computer program that causes the computer to execute at least a part of the operations explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM) , Random Access Memory (RAM), and the like. The memory 1002 can be called register, cache, main memory (main memory) , and the like. The memory 1002 can store therein a computer program (computer program codes) , software modules, and the like that can execute the method according to the embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including at least one of the memory 1002 and the storage 1003, a server, or other appropriate medium.

The communication device 1004 is hardware (transmission / reception device) capable of performing communication between computers via a wired and / or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware . For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, broadcast information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA) , New Radio (NR), W-CDMA (Registered Trademark), GSM (Registered Trademark), CDMA2000, Ultra Mobile Broadband (UMB) , IEEE 802.11 (Wi-Fi (Registered Trademark)) , IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from an upper layer (or lower layer) to a lower layer (or upper layer). It may be input and output via a plurality of network nodes.

The input / output information can be stored in a specific location (for example, a memory) or can be managed in a management table. The information to be input / output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like) , then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling) . Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of at least one of a base station and a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like) , a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D) , Vehicle-to-Everything (V2X) , or the like) . In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables, and printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as "a", "an", and "the" in English are added, in this disclosure, these articles shall include plurality of nouns following these articles.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### INDUSTRIAL APPLICABILITY

The above-mentioned user equipment is useful because, in the simultaneous communication performed with a plurality of radio base stations, it is possible to transmit the uplink signal at the transmission timing supported by a plurality of radio base stations.

### EXPLANATION OF REFERENCE NUMERALS

- 10: radio communication system
- 100: UE
- 101: transmitting unit
- 103: receiving unit
- 105: control unit
- 200a: eNB
- 200b: gNB
- 300: core network
- 1001: processor
- 1002: memory
- 1003: storage
- 1004: communication device
- 1005: input device
- 1006: output device
- 1007: bus

## Claims

1. A user equipment comprising:
a control unit that sets a single transmission timing in simultaneous communication performed between the user equipment and a plurality of radio base stations; and
a transmitting unit that transmits an uplink signal to the plurality of radio base stations by using the single transmission timing.

2. The user equipment according to claim 1, further comprising a receiving unit that receives Timing Advance command from a radio base station included in the plurality of radio base stations,
wherein the control unit adjusts the single transmission timing based on the Timing Advance command.

3. The user equipment according to claim 2, wherein the control unit associates the Timing Advance command with a subcarrier interval usable in a component carrier set between a radio base station included in the plurality of radio base stations and the user equipment, and calculates a timing adjustment value for the single transmission timing based on the association.

4. The user equipment according to claim 2, wherein based on reception of the Timing Advance command, the control unit starts Time Alignment timer associated with the Timing Advance command and starts or restarts Time Alignment timer associated with other Timing Advance command.

5. The user equipment according to claim 2, wherein, as a result of adjusting the single transmission timing, when a difference between a transmission timing before the adjustment and a transmission timing after the adjustment is larger than a predetermined value, the control unit invalidates the adjustment or stops the uplink transmission.

6. The user equipment according to claim 1, wherein, if the single transmission timing has been set, the transmitting unit transmits the uplink signal to a newly added radio base station without performing a random access procedure.

7. The user equipment according to claim 1, wherein the control unit applies a transmission timing established between any of the radio base stations included in the plurality of radio base stations and the user equipment, as the single transmission timing.
